# FASCICULE DE BREVET EUROPEEN

(11) **EP 1 209 344 B1**
(45) Date de publication et mention de la délivrance du brevet: **10.01.2007**
(21) Numéro de dépôt: 01402873.2
(22) Date de dépôt: 08.11.2001
(51) Int. Cl.: F02K 9/97

(54) **Tuyères de fusée**
Raketendüse
Rocket nozzle

(30) Priorité: 22.11.2000 FR 0015057
(43) Date de publication de la demande: 29.05.2002
(73) Titulaire: SNECMA, 75015 Paris (FR)
(72) Inventeur: Vuillamy, Didier, 76230 Quincampoix (FR); Harlay, Jean-Claude, 27940 Port-Mort (FR)
(74) Mandataire: Desormiere, Pierre-Louis

(56) Documents cités:
- DE-B- 1 019 867
- FR-A- 808 969
- FR-A- 2 602 275
- US-A- 3 237 402
- US-A- 3 469 787
- US-A- 5 779 151
- US-A- 5 894 723

## Description

### Domaine de l'invention

La présente invention concerne un dispositif de contrôle de décollement de jet pour des tuyères de moteur-fusée à grand rapport de section destinées à fonctionner dans des conditions de pression variable.

### Art antérieur

Pour obtenir une impulsion spécifique élevée en altitude, les moteurs de fusée sont équipés de tuyères à grand rapport de section. En effet, pour un moteur donné, au cours d'une montée dans l'atmosphère, la pression ambiante va décroître, passant de la pression atmosphérique au niveau de la mer à une pression faible fonction de l'altitude. Les tuyères sont généralement optimisées en fonction des performances globales du lanceur, ce qui conduit à utiliser des tuyères sur-détendues dont la poussée sera maximale à une altitude dite "d'adaptation". Par conséquent, à la pression atmosphérique qui règne au niveau de la mer, la détente des gaz dans la tuyère est limitée par le phénomène de décollement du jet de la paroi du divergent.

Ce phénomène existe pendant toute une phase de vol comprise depuis le décollage et jusqu'à l'altitude d'adaptation, qui peut être située par exemple à une dizaine de kilomètres du sol et à laquelle la poussée devient maximale en raison de la pression statique Pe des gaz dans la section de sortie de la tuyère qui est alors égale à la pression ambiante Pa qui est relativement faible. Pour toute cette phase de vol, la pression statique des gaz dans la section de sortie de la tuyère est très inférieure à la pression ambiante ce qui entraîne le phénomène de décollement du jet dans la tuyère qui disparaît à l'altitude d'adaptation. Durant cette phase, ce phénomène limite le rapport de détente des gaz, c'est-à-dire le rapport entre la pression Po dans la chambre de combustion et la pression statique Pe des gaz dans la section de sortie de la tuyère.

Le décollement du jet à l'intérieur de la tuyère a pour inconvénient de créer au niveau des zones de décollement des efforts mécaniques néfastes pour la structure du divergent.

Pour limiter les effets dus au décollement de jet, différents types de solutions ont déjà été proposés.

Un premier type consiste à équiper les moteurs-fusées de systèmes à tuyères déployables. Les documents US-A-4 489 889, US-A-4 779 799 et US-A-4 676 436 décrivent des systèmes de tuyère relativement compliqués qui permettent au cours d'un vol d'adapter la longueur et la section de sortie de la tuyère en fonction des conditions de pression. Les systèmes décrits dans ces documents ont été développés pour des utilisations sur des missiles ou des moteurs d'étage supérieur qui présentent des caractéristiques de fonctionnement et de dimensions différentes de celles des moteurs-fusée principaux. Ces systèmes fragiles et encombrants ne sont pas conçus pour être largués à l'altitude d'adaptation et sont donc difficilement applicables à des tuyères de propulseur principal d'une fusée.

Un second type de solution consiste à proposer des tuyères comprenant un système à éléments éjectables, tel que celui décrit dans le document FR-A-2 503 794 qui montre une tuyère comprenant plusieurs divergents de taille croissante emboîtés les uns dans les autres et successivement largués en fonction de l'altitude. Toutefois, un tel système est complexe et comprend un risque d'endommagement des divergents durant les largages successifs. Par ailleurs, l'étanchéité entre les divergents éjectables est un véritable problème car les gaz ont tendance à s'infiltrer entre ces éléments et à les détériorer sur leur face qui n'est pas prévue pour être soumise à des gaz chauds. Un autre document FR-A-2 705 739 propose un dispositif éjectable de réduction de section de sortie d'une tuyère pour confiner le jet à l'intérieur de la tuyère et limiter ainsi les fluctuations axiales de la ligne de décollement. Une difficulté à laquelle est confronté ce dispositif est la tenue thermique de l'élément éjectable, qui sans refroidissement est sollicité à des températures proches de celles des gaz de la chambre de combustion, c'est-à-dire environ 3000 °K. Il est donc nécessaire de réaliser une injection de fluide de basse température dans la zone de décollement interne au divergent, pour réduire les flux thermiques reçus par la paroi. Ceci pose des problèmes de fiabilité de fonctionnement et de consommation de fluide.

Un autre type de solution concerne des tuyères équipées de systèmes à admission d'air qui, comme divulgué dans le document US-A-5 683 033, permettent de stabiliser le décollement et de réduire la traînée du divergent. Ce système est constitué de multiples éléments mobiles (ex. clapets) dont la sûreté de fonctionnement est difficile à assurer dans l'environnement acoustique et vibratoire d'un moteur-fusée. De plus, ce système à admission d'air ambiant tout comme celui du document US-A-5 450 720 qui montre une tuyère dans laquelle le décollement est contrôlé par l'admission d'air ambiant à travers de larges fentes longitudinales réalisées sur la paroi de la tuyère, présente un risque de combustion complémentaire des gaz issus de la tuyère qui a pour conséquence des échauffements au niveau de la paroi du divergent nécessitant aussi une protection thermique particulière.

Le problème du décollement de jet dans la tuyère peut être également traité par des dispositifs d'injection de gaz à différentes hauteurs dans le divergent qui permettent de fixer et de régulariser le décollement. Ce genre de dispositif est décrit notamment dans les documents US-A-3 925 982 et FR-A-2 628 488. Ces dispositifs à injection de fluide nécessitent toutefois, pour le contrôle du débit, un appareillage complexe de vannes et de commandes aboutissant à alourdir considérablement le divergent de la tuyère. De plus, comme ces dispositifs sont consommateurs de fluide, ils ne sont utilisables que si l'on dispose à faible coût de gaz peu exploitable autrement, c'est-à-dire seulement avec des moteurs à cycle dérivé.

Une dernière solution consiste, comme divulgué dans le document FR-A-2 639 404, à contrôler le décollement dans une tuyère de grand rapport de section grâce à la présence d'une barrière de fluide réalisée en extrémité de divergent. Ce dispositif est efficace mais il oblige à consommer des gaz qui pourraient être plus utilement exploités dans leur détente soit par la tuyère principale, pour un moteur à flux dérivé, soit dans des tuyères à plus grand rapport de section, pour un moteur à cycle dérivé. De plus, cet équipement est coûteux, nécessairement lourd avec la présence de vannes, et son implantation en bas de tuyère génère une grande inertie de la tuyère préjudiciable à la robustesse de la chambre propulsive.

### Objet et description succincte de l'invention

La présente invention vise à remédier aux inconvénients précités et à réaliser un dispositif qui permet de supprimer ou réduire le décollement du jet dans une tuyère. L'invention vise à réduire et à contrôler le phénomène de décollement de jet avec un dispositif passif qui ne consomme pas de fluide que ce soit pour son refroidissement ou pour le contrôle du jet et qui présente une structure statique garantissant la simplicité et la fiabilité du dispositif.

Ces buts sont atteints grâce à une tuyère de moteur-fusée comprenant une structure annulaire largable placée autour de la paroi externe d'une tuyère au niveau de la section de sortie des gaz, la structure annulaire définissant une extension radiale vers l'extérieur de la tuyère.

Ainsi l'invention propose une tuyère avec un dispositif de contrôle de décollement de jet simple et efficace qui est applicable à tous les moteurs-fusées, quel que soit leur cycle, et qui, de par sa conception ne nécessite que des modifications mineures de la structure du divergent pour son installation. Le dispositif présente l'avantage de ne pas fragiliser les divergents, mais procure au contraire un renforcement mécanique du bas du divergent qui limite ainsi les effets nuisibles des grandes déformations apparaissant notamment dans les phases de démarrage et d'arrêt des moteurs. Ce dispositif ne dégrade pas les performances du moteur. De plus, puisqu'il est externe au divergent, il n'est pas soumis à des contraintes thermiques auxquelles s'exposent tous les autres dispositifs présentant des surfaces en contact avec le jet et ne nécessite donc pas de prélèvement de gaz pour assurer son refroidissement.

Selon un aspect de la présente invention, la structure annulaire présente une forme sensiblement tronconique inclinée vers l'extérieur.

L'effet de création d'une zone de basse pression sur la face inférieure du dispositif est alors augmenté.

Plus particulièrement, la structure annulaire présente une courbure de profil qui forme un angle avec un plan perpendiculaire à l'axe de la tuyère qui est compris entre 10 et 20°.

Selon un mode de réalisation de l'invention, la face inférieure de la structure annulaire comporte des créneaux pour freiner l'écoulement de l'air le long de cette face.

Dans ce cas, le ralentissement de l'écoulement de l'air sur la face inférieure du dispositif est encore augmenté.

La structure annulaire présente un diamètre interne légèrement supérieur au diamètre de la section de sortie de la tuyère, ce qui autorise le déplacement de la tuyère par rapport à la structure annulaire sous l'effet d'une dilatation thermique.

La structure annulaire est constituée par un ensemble de secteurs angulaires assemblés les uns aux autres par des surfaces de contact qui rendent leurs déplacements solidaires, le dispositif comprenant en outre des moyens pour maintenir l'assemblage des secteurs autour de la tuyère.

Une telle constitution du dispositif permet le largage de la structure annulaire sans risque d'endommagement du divergent de la tuyère.

Plus particulièrement, les moyens de maintien des secteurs autour de la tuyère comprennent un premier câble entourant l'assemblage de secteurs au voisinage de sa périphérie interne et un deuxième câble entourant l'assemblage de secteurs au voisinage de sa périphérie externe, les premier et second câbles étant chacun respectivement reliés à des premier et second organes de tension formant ainsi deux boucles de serrage des secteurs, les organes de tension comprenant des moyens de rupture des câbles.

Les deux câbles exercent des efforts radiaux sur chaque secteur qui sont repris par des efforts latéraux permettant de rigidifier et de renforcer la structure annulaire autour de la tuyère tout en permettant son éjection au moment voulu.

Les surfaces de contact des secteurs comprennent des portions qui s'élèvent au dessus de la face supérieure desdits secteurs.

Les risques de flambage des secteurs sous la pression de contact sont ainsi évités.

Dans le cas où des glissements de secteurs seraient détectés, les surfaces de contact des secteurs peuvent comprendre alternativement une gorge et une projection pour recevoir ou emboîter respectivement la projection ou la gorge de la surface de contact du secteur adjacent.

Les gorges peuvent avantageusement comprendre un joint en élastomère pour prévenir des fuites entre les secteurs.

Selon un aspect particulier de l'invention, au moins deux secteurs de la structure annulaire présentent une taille réduite par rapport aux autres secteurs, les secteurs de taille réduite étant disposés uniformément dans la structure annulaire.

Le décollement du jet dans la tuyère est alors contrôlé en évitant l'apparition de zones de décollement désordonnées dangereuses pour la structure du divergent.

Le décollement du jet dans la tuyère peut également être imposé avec au moins deux secteurs de la structure annulaire qui comprennent une perforation sur leur surface, les secteurs perforés étant disposés uniformément dans la structure annulaire.

Un décollement du jet contrôlé permet alors un dimensionnement adapté de la tuyère.

La tuyère comporte au niveau de sa section de sortie un rebord externe sensiblement plan ayant un diamètre supérieur à celui de la périphérie interne du dispositif pour former un support pour ledit dispositif.

Ceci caractérise la modification mineure qu'il faut apporter à une tuyère de moteur-fusée pour qu'elle puisse utiliser le dispositif selon l'invention.

Plus précisément, le rebord s'étend radialement par rapport à la section de sortie de la tuyère sur une distance de l'ordre de 5 à 8 cm.

Conformément à un aspect de l'invention, la section de sortie de la tuyère comprenant le rebord est recouverte sur sa surface externe d'un matériau déformable.

De cette façon, les fuites éventuelles entre le dispositif et la paroi externe de la tuyère peuvent être limitées.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en demi-coupe axiale d'une portion de tuyère équipée d'un dispositif d'extension radiale selon l'invention montrant son principe de fonctionnement,
- la figure 2 est une vue schématique en demi-coupe axiale d'une portion de tuyère équipée d'un dispositif d'extension radiale conformément à un mode de réalisation de l'invention,
- la figure 3 est une vue schématique en demi-coupe axiale d'une portion de tuyère équipée d'un dispositif d'extension radiale conformément à un autre mode de réalisation de l'invention,
- la figure 4 est une vue en perspective montrant un exemple du dispositif d'extension radiale constitué en plusieurs éléments assemblés autour d'une tuyère,
- la figure 5 est une vue en perspective d'un exemple de secteur angulaire constituant une partie du dispositif d'extension radiale selon l'invention,
- les figures 6A et 6B sont respectivement une vue en demi-coupe axiale et une vue schématique représentant l'action des moyens de maintien et l'équilibre mécanique sur chaque secteur,
- la figure 7 est une vue de détail montrant un exemple d'assemblage de secteurs angulaires constituant le dispositif d'extension radiale, et
- la figure 8 est une vue schématique d'un mode de réalisation du dispositif d'extension radiale avec décollement imposé conformément à un mode de réalisation de l'invention.

### Description détaillée des modes de réalisation de l'invention

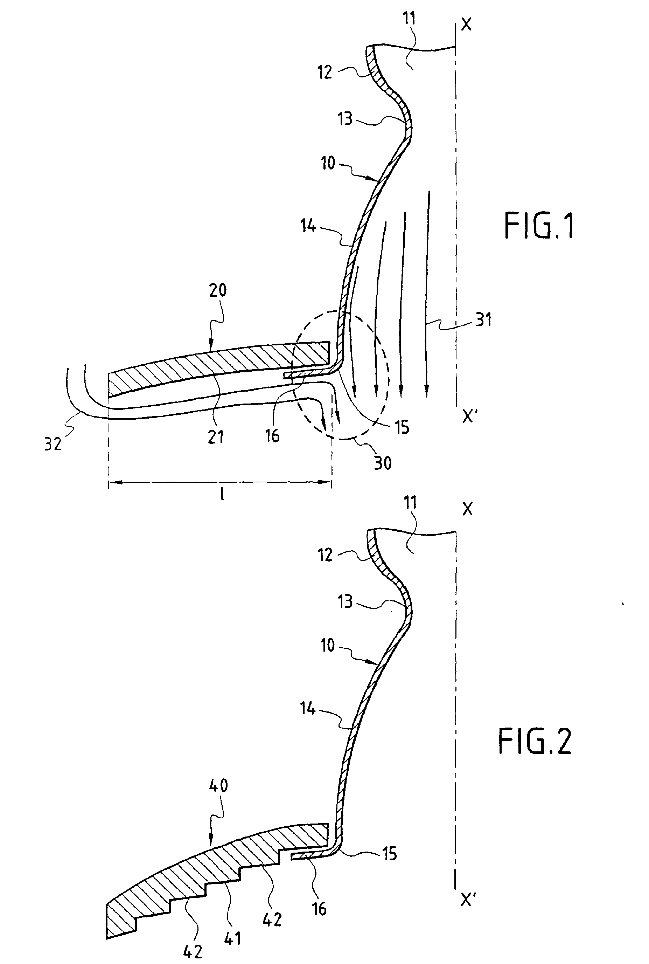

La figure 1 présente en coupe une vue générale d'une tuyère 10 de moteur-fusée destinée à fonctionner avec le dispositif selon la présente invention. La tuyère 10 comprend une partie convergente amont 12 recevant les gaz chauds produits dans une chambre de combustion 11, un col de tuyère 13 de surface de section Sc, et un divergent 14 qui assure la détente des gaz chauds en aval du col 13 et leur éjection au niveau de l'extrémité aval 15 du divergent qui définit une section de sortie de la tuyère de surface Se.

Lorsque l'on cherche à optimiser des tuyères de moteurs-fusées, pour créer une vitesse d'éjection élevée des gaz chauds produits en chambre, il faut notamment détendre le plus possible les gaz dans la tuyère en adoptant pour cela un grand rapport de section défini par la surface de la section de sortie Se que divise la surface de la section au col Sc. Comme il a déjà été expliqué, l'adaptation d'une tuyère ne peut être obtenue, pour un propulseur et un régime donné, qu'à une seule altitude qui en général se situe à plusieurs kilomètres du sol. Par conséquent, si la tuyère est adaptée pour un fonctionnement à haute altitude, avec une pression ambiante relativement faible, la tuyère est sur-détendue au niveau du sol où la pression statique des gaz dans la section de sortie de la tuyère est très inférieure à la pression ambiante Pa qui est alors égale à 1 bar, et il se produit avec les divergents traditionnels un phénomène de décollement du jet des gaz chauds de la paroi interne du divergent.

Plus généralement, dans ce type de tuyère, de la pression atmosphérique au sol jusqu'à la pression ambiante obtenue à l'altitude d'adaptation, la détente des gaz est limitée par le phénomène de décollement du jet des gaz de la paroi interne du divergent. De plus, le phénomène de décollement du jet, par les dissymétries et instabilités qu'il provoque, peut conduire à une destruction du divergent.

C'est pourquoi il a déjà été proposé, dans l'art antérieur, un grand nombre de solutions qui visent à limiter le phénomène de décollement du jet dans la tuyère. Cependant, qu'il s'agisse des systèmes à tuyères déployables, à éléments éjectables, à admission d'air ambiant ou à injection de fluide, aucun d'entre eux n'offre une solution économique et simple de réduire le décollement tout en évitant à la fois la fragilisation du divergent, la dégradation des performances du moteur, la consommation de fluide et les risques dus au largage.

Le fonctionnement du dispositif selon l'invention est expliqué en référence à la figure 1 qui présente en coupe une vue générale de la tuyère 10 de moteur-fusée équipée d'un dispositif de contrôle du décollement du jet selon la présente invention.

Le dispositif consiste en un anneau circulaire 20 qui forme en extrémité de la tuyère une extension radiale I pouvant présenter une faible inclinaison conférant alors à l'anneau une forme sensiblement tronconique. Lorsque le moteur-fusée entre en fonctionnement, le jet principal de la tuyère 10 matérialisé par les flèches 31 entraîne, par sa vitesse d'éjection élevée, une partie de l'air ambiant dans une direction indiquée par les flèches 32 qui aboutit à une zone 30 appelée zone de mélange 30. Cet effet induit un écoulement de renouvellement de l'air entraîné, qui est entravé par la présence de l'anneau 20. Une zone de faible pression sur la face inférieure 21 de l'anneau est ainsi générée, créant artificiellement des conditions de pression en sortie de tuyère semblables à celles obtenues en haute altitude. A titre d'exemple, des pressions de l'ordre de 0.7 à 0.8 bar peuvent être atteintes pour une pression ambiante de 1 bar. Ces valeurs de pressions réduites obtenues au niveau de la section de sortie des gaz grâce à l'anneau circulaire conforme à l'invention correspondent à des valeurs de recollement du jet sur la paroi interne de la tuyère. Ainsi, le décollement du jet qui sans ce dispositif se serait positionné bien à l'intérieur du divergent, se trouve déplacé vers la sortie de la tuyère ou bien supprimé.

L'anneau constituant le dispositif de contrôle de décollement du jet dans la tuyère produit l'effet recherché dès lors qu'il constitue une extension radiale en extrémité de tuyère. Ainsi, par exemple, pour une tuyère de type "Vulcain" de rayon de sortie de l'ordre de 1m, une extension radiale de l'ordre de 50 cm est suffisante. Toutefois, même pour un moteur de plus forte poussée du type "SSME", les dimensions de l'anneau ne sont pas sensiblement modifiées. Pour des tuyères devant être essayées seulement au sol et pour lesquelles l'encombrement n'est pas une contrainte, l'extension radiale peut être étendue jusqu'au double de cette taille.

Le sens physique indique que plus la taille I de l'anneau est importante, plus l'effet recherché est élevé. Toutefois, en considération des critères de poids et d'encombrement déterminants dans les applications de moteurs-fusées, on va chercher à optimiser l'anneau en forme et en taille de façon à accroître au maximum la dépression qu'il engendre. Ainsi, la figure 2 montre un mode de réalisation du dispositif de contrôle selon l'invention qui est constitué d'un anneau 40 comprenant sur sa face inférieure 41 des créneaux 42 qui forment une sorte de labyrinthe pour freiner l'écoulement de l'air le long de la face.

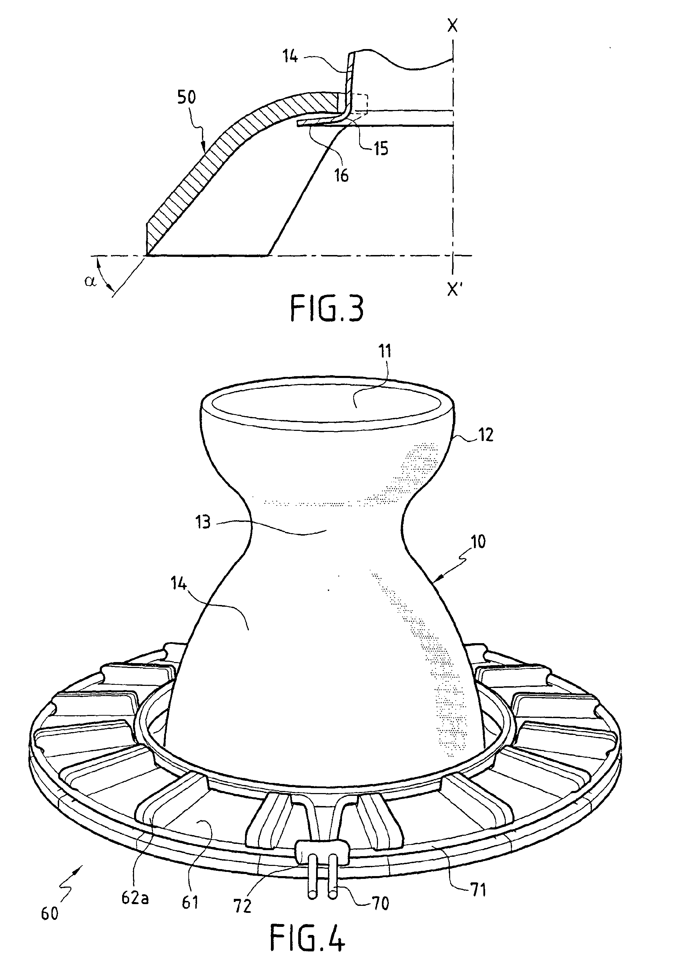

La figure 3 illustre encore un autre mode de réalisation du dispositif qui est formé d'un anneau 50 qui présente une forme dont la courbure assure à elle seule le niveau de dépression souhaité. A titre d'exemple, pour une tuyère présentant un rayon de sortie d'environ 1m, l'anneau 50 peut former par rapport à un plan perpendiculaire à l'axe XX' de la tuyère un angle α compris entre 10 et 20°.

De façon à assurer le largage de l'anneau à l'altitude d'adaptation et pour aussi en assurer un montage aisé sur la tuyère, le dispositif peut être constitué d'une pluralité de secteurs angulaires comme illustré sur la figure 4. Dans cette figure, la tuyère 10 est équipée à son extrémité d'un anneau 60 comprenant une pluralité de secteurs angulaires 61 disposés les uns à côté des autres et maintenus ensemble autour de la tuyère par des premier et second câbles 70 et 71 disposés sur la face supérieure de chaque secteur. Chacun des deux câbles coopère avec un système de tension et de déverrouillage propre qui peut comprendre, par exemple tel que représenté pour le câble 70, un organe de guidage et de tension 72 commandé. Ces organes peuvent être positionnés soit sur l'anneau 60, soit sur la paroi externe du divergent. Les deux câbles jouent alors le rôle de joncs qui maintiennent les secteurs les uns par rapport aux autres dans la configuration en anneau pour former l'extension radiale largable de la présente invention. Le montage de l'anneau s'effectue en mettant en place successivement les secteurs à l'aide d'un outil de maintien provisoire, puis en plaçant les câbles sur l'anneau monté et en les serrant à l'intensité désirée.

Chaque système de tension et de déverrouillage des câbles comprend des moyens de rupture du câble qui peuvent être de nature pyrotechnique, pneumatique ou électrique. Il est par exemple possible d'utiliser des boulons explosifs sur les organes de guidage et de tension des câbles. Le largage des secteurs angulaires s'effectue donc par rupture des câbles en commençant par le premier câble 70 situé le plus près de la tuyère.

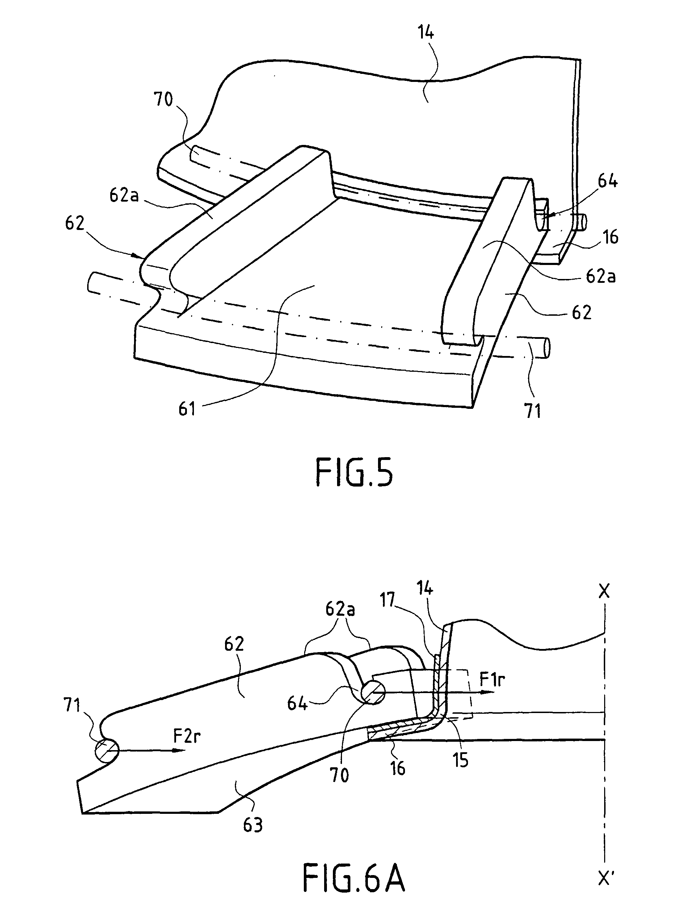

Comme représenté en figure 5, chaque secteur 61 présente une forme qui s'élargit de la partie la plus proche de la tuyère jusqu'à la partie d'extrémité de manière à former, une fois assemblés les uns à côté des autres, la structure annulaire 60. La face inférieure des secteurs 61 présente une forme qui est fonction de la forme de la face inférieure de l'anneau que l'on souhaite obtenir. Les secteurs peuvent présenter notamment une face inférieure 63 courbée dans un plan axial telle qu'illustrée en figure 6A pour définir une configuration de l'anneau suivant le mode de réalisation montré en figure 3 ou bien comprendre des créneaux pour obtenir le mode de réalisation de l'anneau conformément à la figure 2.

Afin de pouvoir supporter des pressions de contact élevées, chaque secteur comporte au niveau de ses surfaces latérales 62, destinées à être en contact avec les secteurs adjacents, une portion 62a surélevée par rapport à la face supérieure du secteur. La forme des portions surélevées 62a est également adaptée pour permettre le placement des premier et second câbles de maintien 70 et 71 respectivement de chaque côté des portions 62a. Plus précisément, le premier câble 70 proche de la tuyère se trouve placé dans une dépression 64 creusée dans l'épaisseur du panneau avant les portions surélevées 62a. Il en est de même pour le deuxième câble 71 qui se trouve placé dans une dépression creusée dans l'épaisseur du panneau à l'arrière des portions surélevées 62a.

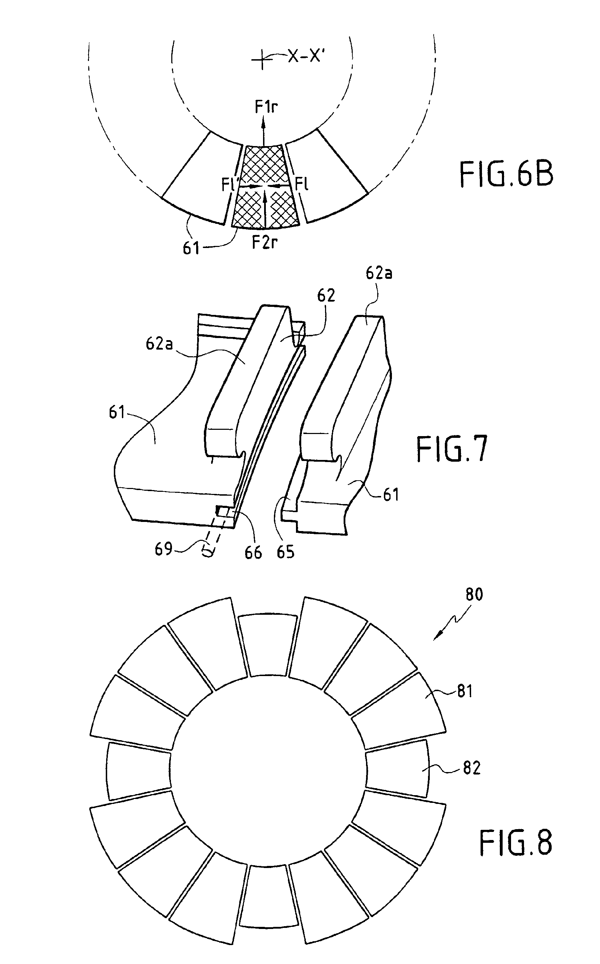

Les figures 6A et 6B montrent l'action des câbles 70 et 71 et l'équilibre mécanique de chaque secteur. Sur la figure 6A, les câbles 70 et 71 exercent respectivement des efforts F1r et F2r dans un plan dont la normale est orientée suivant l'axe X - X' de la tuyère. Ces efforts ne sont pas nécessairement situés dans le même plan comme indiqué sur la figure 6A. L'orientation des efforts F1r et F2r dépend de la forme des secteurs.

Sur la figure 6B on observe que les efforts F1r et F2r exercés par les câbles sur un secteur sont repris par les efforts latéraux FI et FI' qu'exerce chaque secteur adjacent sur les surfaces de contact latérales respectives. De façon à pouvoir exercer des efforts intenses F1r, F2r de contact entre les secteurs et pour éviter le flambage des secteurs, il est préférable d'accroître les surfaces latérales de contact avec des portions surélevées 62a telles que décrites plus haut. De plus, les couples produits par les deux câbles, qui ne sont pas nécessairement dans le même plan, sont plus facilement repris par ce type de géométrie de secteur.

Le choix des matériaux pour réaliser les secteurs angulaires 61 est large. En effet, le dispositif constitué des secteurs n'étant pas sur le trajet de sortie du jet de la tuyère, il n'est pas soumis aux températures élevées qui sont générées par les gaz éjectés et il n'est donc pas nécessaire d'utiliser des matériaux spéciaux thermiquement très résistants et évidemment relativement coûteux. Les secteurs peuvent être alors réalisés en matériaux composites, en tôle d'acier, ou en fibre de carbone suivant le compromis poids/performance que l'on souhaite obtenir. A titre d'exemple, pour des secteurs 61 fabriqués en matériau composite, l'épaisseur du secteur sera comprise entre 15 et 20 mm ; la hauteur des portions surélevées 62a sera de 80 à 150 mm, épaisseur du secteur comprise, alors que leur largeur sera de 40 mm.

Dans le cas où des glissements de secteurs seraient détectés, une gorge 66 et une projection 65 peuvent être respectivement prévues sur l'une et l'autre faces latérales 62 de chaque secteur, comme indiqué sur la figure 7. Ainsi, deux secteurs adjacents se trouvent solidarisés par l'emboîtement de la projection 67 d'un secteur dans la gorge 66 du secteur adjacent.

Afin d'optimiser le fonctionnement du dispositif de l'invention, il est possible de prévoir des moyens supplémentaires sur le dispositif et sur la tuyère pour prévenir des fuites éventuelles. De telles fuites peuvent avoir lieu entre les secteurs formant l'anneau sous l'effet de la différence de pression existant entre les deux faces des panneaux (face supérieure et face inférieure). Ce type de fuite entre les secteurs peut être limité en disposant un joint, par exemple en élastomère, dans chacune des gorges 66 des secteurs comme illustré en figure 7. Ces joints ne requièrent aucune propriété de résistance thermique particulière, puisqu'ils ne sont pas soumis à des températures élevées. Ils sont comprimés lors du serrage des câbles de maintien. De plus, leur implantation dans les gorges les protège des éventuelles remontées de gaz chauds lors des arrêts moteurs. Leur remplacement, dans le cas d'essais de moteur au sol, sera donc peu fréquent.

Pour des fuites qui peuvent intervenir entre la structure de l'anneau du dispositif et la paroi externe de la tuyère au niveau du divergent, le rebord 16 présent en extrémité 15 de la tuyère 10 qui s'étend vers l'extérieur afin de former un support pour le dispositif peut être recouvert d'une matière déformable 17 du type caoutchouc ou élastomère. Ce matériau 17 peut être un matériau susceptible de fondre sous l'accroissement de température de la paroi de la tuyère permettant ainsi une meilleure étanchéité. Dans ce cas, le matériau sera remplacé après chaque mise à feu.

A titre d'exemple, dans le cas du moteur type "Vulcain", on estime que le débit massique d'air entraîné est de l'ordre de 13 kg/s. En considérant que le système est tolérant à l'admission, toute fuite confondue, de 1 ou 2 dixièmes de ce débit, on calcule que la section totale des chemins de fuite ne doit pas être supérieure à un disque de diamètre de 10 à 12 cm.

Pendant le fonctionnement d'un moteur-fusée, les températures élevées présentes dans la tuyère peuvent entraîner une dilatation du matériau de cette dernière. En conséquence, il peut être prévu lors du dimensionnement de l'anneau, que sa circonférence interne soit légèrement supérieure à celle de l'extrémité 15 de la tuyère autour de laquelle il est placé afin de permettre à la tuyère de se déformer dans les limites normales de la dilatation thermique. Ce déplacement est facilité par la face plane de contact entre le rebord 16 qui sert de support à l'anneau et l'anneau. Toujours en relation avec l'exemple d'un moteur "Vulcain", si on considère que la tuyère est constituée d'un matériau de coefficient de dilatation thermique de valeur 1 e-05, on calcule que pour la tuyère de rayon de sortie de 1m, la variation de rayon sera de 1 cm pour un changement de température de 1000 K.

Les modes de réalisation du dispositif de contrôle selon l'invention jusqu'ici décrits ont pour fonction de limiter ou de supprimer le décollement du jet dans la tuyère. Toutefois, la forme de l'anneau constituant le dispositif peut être adaptée pour permettre une répartition périodique du champ de pression sur son pourtour. Ceci est réalisé, par exemple, en plaçant à intervalles réguliers des secteurs présentant soit une forme, soit une taille différente. La figure 8 montre un exemple d'un dispositif formé d'un anneau 80 comprenant 4 secteurs 82 de taille inférieure par rapport aux autres secteurs 81. Les secteurs 82 de taille inférieure sont uniformément répartis sur l'anneau ce qui permet d'obtenir un décollement du jet en 4 lobes à l'intérieur du divergent. Dans ce type de mode de réalisation du dispositif avec des secteurs de taille différente, le mode d'accrochage de ces derniers sera adapté.

Alternativement, il est possible de réaliser un anneau qui permet aussi un décollement imposé du jet en utilisant des secteurs qui ont tous une même interface mécanique mais dont certains d'entre eux ont une performance différente de la majorité grâce à la modification de leur forme. Par exemple, on peut utiliser des secteurs qui se distinguent des autres par une perforation importante pratiquée dans leur épaisseur laissant l'air ambiant pénétrer facilement vers le bas du divergent et générant ainsi un décollement plus fort dans ces régions. La taille des secteurs ou des perforations destinés à créer un décollement imposé du jet sont fonctions de l'effet de décollement que l'on souhaite obtenir.

Par conséquent, puisque le décollement du jet est contrôlé grâce à la structure adaptée de l'anneau pour que la répartition des lobes ainsi obtenus soit uniforme et symétrique, les phénomènes de dissymétrie et d'instabilité sont évités. Le décollement contrôlé permet un dimensionnement adapté de la tuyère pour un décollement du jet sans danger de destruction pour le divergent et pour une poussée stable du moteur.

## Revendications

1. Tuyère (10) de moteur-fusée comprenant une structure annulaire (20) largable placée autour de la paroi externe de la tuyère (10) au niveau de la section (15) de sortie des gaz, **caractérisée en ce que** ladite structure définit une extension radiale (I) vers l'extérieur de la tuyère.

2. Tuyère selon la revendication 1, **caractérisée en ce que** la structure annulaire présente une forme sensiblement tronconique inclinée vers l'extérieur.

3. Tuyère selon la revendication 1 ou 2, **caractérisée en ce que** la face inférieure (41) de la structure annulaire (40) comporte des créneaux (42) pour freiner l'écoulement de l'air le long de ladite face.

4. Tuyère selon la revendication 1 ou 2, **caractérisée en ce que** la structure annulaire (50) présente une courbure de profil qui forme un angle (α) avec un plan perpendiculaire à l'axe de la tuyère qui est compris entre 10 et 20°.

5. Tuyère selon l'une quelconque des revendications 1 à 4, **caractérisée en ce que** la structure annulaire présente un diamètre interne légèrement supérieur au diamètre de la section de sortie de la tuyère, de manière à autoriser un déplacement de la tuyère par rapport à la structure annulaire sous l'effet d'une dilatation thermique.

6. Tuyère selon l'une quelconque des revendications 1 à 5, **caractérisée en ce que** la structure annulaire (60) est constituée par un ensemble de secteurs angulaires (61) assemblés les uns aux autres par des surfaces de contact (62) qui rendent leurs déplacements relatifs impossibles, ledit dispositif comprenant en outre des moyens (70, 71) pour maintenir ledit assemblage de secteurs autour de la tuyère.

7. Tuyère selon la revendication 6, **caractérisée en ce que** les moyens de maintien des secteurs (61) autour de la tuyère comprennent un premier câble (70) entourant l'assemblage de secteurs au voisinage de sa périphérie interne et un deuxième câble (71) entourant l'assemblage de secteurs au voisinage de sa périphérie externe, lesdits premier et second câbles étant chacun respectivement reliés à des premier et second organes de tension (72) formant ainsi deux boucles de serrage des secteurs, lesdits organes de tension comprenant des moyens de rupture desdits câbles.

8. Tuyère selon la revendication 6 ou 7, **caractérisée en ce que** les surfaces de contact des secteurs comprennent des portions (62a) qui s'élèvent au dessus de la face supérieure desdits secteurs.

9. Tuyère selon l'une quelconque des revendications 6 à 8, **caractérisée en ce que** les surfaces de contact (62) des secteurs comprennent alternativement une gorge (66) et une projection (65) pour recevoir ou emboîter respectivement la projection ou la gorge de la surface de contact du secteur adjacent.

10. Tuyère selon la revendication 9, **caractérisée en ce que** lesdites gorges comprennent un joint (69) du type en élastomère.

11. Tuyère selon l'une quelconque des revendications 6 à 10, **caractérisée en ce qu'**au moins deux secteurs (82) de la structure annulaire (80) présentent une taille réduite par rapport aux autres secteurs (81), lesdits au moins deux secteurs de taille réduite étant disposés uniformément dans la structure annulaire.

12. Tuyère selon l'une quelconque des revendications 6 à 10, **caractérisée en ce qu'**au moins deux secteurs de la structure annulaire comprennent une perforation sur leur surface, lesdits au moins deux secteurs perforés étant disposés uniformément dans la structure annulaire.

13. Tuyère selon l'une quelconque des revendications 1 à 12, **caractérisée en ce qu'**elle comporte au niveau de sa section de sortie (15) un rebord externe (16) sensiblement plan ayant un diamètre supérieur à celui de la périphérie interne de la structure annulaire pour former un support pour ladite structure.

14. Tuyère selon la revendication 13, **caractérisée en ce que** le rebord (16) s'étend radialement par rapport à la section de sortie de la tuyère sur une distance de l'ordre de 5 à 8 cm.

15. Tuyère selon les revendications 13 ou 14, **caractérisée en ce que** la section de sortie de la tuyère comprenant le rebord est recouverte sur sa surface externe d'un matériau déformable (17).

## Claims

1. A rocket engine nozzle (10) comprising a jettisonable annular structure (20) placed around the outside wall of the nozzle (10) level with the gas outlet section (15) thereof, the nozzle being **characterised in that** said structure defines a radial extension (ℓ) towards the outside of the nozzle.

2. A nozzle according to claim 1, **characterised in that** the annular structure is substantially frustoconical in shape sloping outwards.

3. A nozzle according to claim 1 or claim 2, **characterised in that** the bottom face (41) of the annular structure (40) has steps (42) to brake the flow of air along said face.

4. A nozzle according to claim 1 or claim 2, **characterised in that** the annular structure (50) has a curved profile forming an angle (α) relative to a plane perpendicular to the axis of the nozzle lying in the range 10° to 20°.

5. A nozzle according to any one of claims 1 to 4, **characterised in that** the annular structure presents an inside diameter that is slightly greater than the outside diameter of the outlet section of the nozzle, thereby leaving clearance enabling the nozzle to move relative to the annular structure under the effect of thermal expansion.

6. A nozzle according to any one of claims 1 to 5, **characterised in that** the annular structure (60) is constituted by a set of angular sectors (61) assembled to one another via contact surfaces (62) which prevent them from moving relative to one another, said device also comprising means (70, 71) for holding said assembly of sectors around the nozzle.

7. A nozzle according to claim 6, **characterised in that** the means for holding the sectors (61) around the nozzle comprise a first cable (70) surrounding the sector assembly in the vicinity of its inner periphery, and a second cable (71) surrounding the sector assembly in the vicinity of its outer periphery, each of said first and second cables being connected to respective first and second tensioning members (72), thereby forming two sector-clamping loops, said tensioning members also including means for rupturing said cables.

8. A nozzle according to claim 6 or claim 7, **characterised in that** the contact surfaces of the sectors include portions (62a) which are raised above the top faces of said sectors.

9. A nozzle according to any one of claims 6 to 8, **characterised in that** the contact surfaces (62) of the sectors comprise in alternation a groove (66) and a tongue (65) for receiving or engaging the tongue or the groove respectively of the contact surface of the adjacent sector.

10. A nozzle according to claim 9, **characterised in that** said grooves contain respective gaskets (69) of elastomer type.

11. A nozzle according to any one of claims 6 to 10, **characterised in that** at least two sectors (82) of the annular structure (80) are of a size that is smaller than the size of the other sectors (81), said at least two smaller sectors being disposed uniformly in the annular structure.

12. A nozzle according to any one of claims 6 to 10, **characterised in that** at least two sectors of the annular structure have a perforated surface, said at least two perforated sectors being disposed uniformly within the annular structure.

13. A nozzle according to any one of claims 1 to 12, **characterised in that** it includes a substantially plane outwardly-directed rim (16) at its outlet section (15) having a diameter greater than the diameter of the inner periphery of the annular structure so as to form a support for said structure.

14. A nozzle according to claim 13, **characterised in that** the rim (16) extends radially relative to the outlet section of the nozzle over a distance of the order of 5 cm to 8 cm.

15. A nozzle according to claim 13 or claim 14, **characterised in that** the outlet section of the nozzle comprising the rim is covered on its outside surface in a deformable material (17).

## Patentansprüche

1. Raketenbrennkammerdüse (10) umfassend eine abwerfbare ringförmige Struktur, die um die äußere Wand der Düse auf der Ebene des Gasauslaßquerschnitts (15) angeordnet ist, **dadurch gekennzeichnet, daß** die Struktur eine radiale Erweiterung (I) nach Außen der Düse bildet.

2. Düse nach Anspruch 1, **dadurch gekennzeichnet, daß** die ringförmige Struktur eine im Wesentlichen kegelförmige, nach Außen geneigte Form aufweist.

3. Düse nach einem der Ansprüche 1 oder 2, **dadurch gekennzeichnet, daß** die untere Seite (41) der ringförmigen Struktur (40) Zinnen umfaßt, um das Fließen der Luft entlang der genannten Seite zu bremsen.

4. Düse nach einem der Ansprüche 1 oder 2, **dadurch gekennzeichnet, daß** die ringförmige Struktur (50) eine Krümmung ihres Profils aufweist, die einen Winkel (α) mit einer auf der Düsenachse senkrechten Ebene bildet, der zwischen 10 und 20° liegt.

5. Düse nach einem der Ansprüche 1 bis 4, **dadurch gekennzeichnet, daß** die ringförmige Struktur einen inneren Durchmesser aufweist, der leicht größer ist als der Durchmesser des Auslaßquerschnitts der Düse derart, daß eine Bewegung der Düse in Bezug auf die ringförmige Struktur unter der Wirkung von einer Wärmedehnung ermöglicht wird.

6. Düse nach einem der Ansprüche 1 bis 5, **dadurch gekennzeichnet, daß die** ringförmige Struktur (60) aus einem Satz von Winkelsektoren (61) besteht, die miteinander durch Kontaktflächen (62), die ihre relativen Bewegungen unmöglich machen, zusammengesetzt sind, wobei die Vorrichtung ferner Mittel (70, 71) umfaßt, um die Sektorenanordnung um die Düse aufrecht zu halten.

7. Düse nach Anspruch 6, **dadurch gekennzeichnet, daß** die Mittel zum Halten der Sektoren (61) um die Düse eine erste Leine (70) sind, die die Sektorenanordnung nahe ihres Innenumfangs umschließt und ein zweites Kabel (71), das die Sektorenanordnung nahe ihres Außenumfangs umschließt, umfassen, wobei die erste und das zweite Leine (72) jeweils mit einem ersten und einem zweiten Spannungsorganen (72) verbunden sind, die so zwei Schlingen zum Festziehen der Sektoren bilden, wobei die Spannungsorgane Bruchmittel der Kabel umfassen.

8. Düse nach einem der Ansprüche 6 oder 7, **dadurch gekennzeichnet, daß** die Kontaktflächen der Sektoren Anteile (61a) umfassen, die über die obere Seite der Sektoren ragen.

9. Düse nach einem der Ansprüche 6 bis 8, **dadurch gekennzeichnet, daß** die Kontaktflächen (62) der Sektoren abwechselnd eine Rille (66) und einen Vorsprung (65) umfassen, um jeweils den Vorsprung oder die Rille der Kontaktfläche des benachbarten Sektors aufzunehmen oder einzufassen.

10. Düse nach Anspruch 9, **dadurch gekennzeichnet, daß** die Rillen eine Dichtung (69) vom Elastomertyp umfassen.

11. Düse nach einem der Ansprüche 6 bis 10, **dadurch gekennzeichnet, daß** mindestens zwei Sektoren (81) der ringförmigen Struktur (80) eine reduzierte Größe in Bezug auf die anderen Sektoren (81) aufweisen, wobei die mindestens zwei Sektoren reduzierter Größe gleichmäßig in der ringförmigen Struktur angeordnet sind.

12. Düse nach einem der Ansprüche 6 bis 10, **dadurch gekennzeichnet, daß** mindestens zwei Sektoren der ringförmigen Struktur eine Perforation auf ihrer Oberfläche umfassen, wobei die mindestens zwei perforierten Sektoren gleichmäßig in der ringförmigen Struktur angeordnet sind.

13. Düse nach einem der Ansprüche 1 bis 12, **dadurch gekennzeichnet, daß** sie auf der Ebene ihres Auslaßquerschnitts (15) einen äußeren, im wesentlichen ebenen Rand (16) umfaßt, der einen Durchmesser aufweist, der ist als die Innenumfang der ringförmigen Struktur, um einen Träger für die Struktur zu bilden.

14. Düse nach Anspruch 13, **dadurch gekennzeichnet, daß** der Rand sich radial in Bezug auf den Auslaßquerschnitt der Düse über eine Strecke von 5 bis 8 cm erstreckt.

15. Düse nach einem der Ansprüche 13 oder 14, **dadurch gekennzeichnet, daß** der Auslaßquerschnitt der Düse, der den Rand umfaßt, auf seiner Außenfläche von einem verformbaren Material (17) bedeckt ist.
